(19) Europäisches Patentamt
European Patent Office
Office européen des brevets

(11) **EP 2 892 021 A1**

(12) **EUROPEAN PATENT APPLICATION**
published in accordance with Art. 153(4) EPC

(43) Date of publication:
**08.07.2015 Bulletin 2015/28**

(21) Application number: **13832017.1**

(22) Date of filing: **28.08.2013**

(51) Int Cl.:
*G06Q 50/10* (2012.01)   *G08G 1/01* (2006.01)
*H04W 4/02* (2009.01)   *H04W 64/00* (2009.01)

(86) International application number:
**PCT/JP2013/072976**

(87) International publication number:
**WO 2014/034707 (06.03.2014 Gazette 2014/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.08.2012 JP 2012187935**

(71) Applicant: **NTT DOCOMO, INC.
Chiyoda-ku
Tokyo 100-6150 (JP)**

(72) Inventors:
• **YOSHIMI, Toshiyasu
  Tokyo 100-6150 (JP)**
• **OTSUKA, Takayuki
  Tokyo 100-6150 (JP)**

(74) Representative: **Hoffmann Eitle
Patent- und Rechtsanwälte PartmbB
Arabellastraße 30
81925 München (DE)**

(54) **INFORMATION PROCESSING DEVICE AND INFORMATION PROCESSING METHOD**

(57)   Information acquisition unit (101) acquires terminal identification information for identifying a communication terminal capable of receiving a signal from a communication unit. Status acquisition unit (102) acquires a terminal status for determining whether the communication terminal identified by the terminal identification information acquired by information acquisition unit (101) is staying in a predetermined area within a range in which a signal from the communication unit can be received. The determination unit (103) determines whether each communication terminal is staying in the predetermined area, based on the terminal status acquired by status acquisition unit (102). Output unit (104) outputs congestion degree information of a predetermined area in accordance with the number of receivable terminals that are staying in the predetermined area according to the determination by determination unit (103).

FIG. 4

FIG. 5

## Description

Technical field

The present invention relates to a technique for providing information indicating a degree of congestion.

Background

Assuming that the proportion of those who possess a communication terminal such as a mobile phone or a smartphone to visitors to a predetermined area such as a shop or a venue is fixed, the degree of congestion of the visitors can be represented by the number of communication terminals that are present in this area. For example, Patent Document 1 recites a technique for grasping a state of congestion in a venue, based on the number of connected mobile radio terminals (i.e., the number of communication terminals) communicating with an antenna base station.

List of Prior Art

Patent Document

Patent Document 1: JP 2001-325300A

Summary of Invention

Technical Problem

An area in which a signal transmitted by a communication unit such as an antenna base station can be received usually is circular around the communication unit. In contrast, an area such as a shop or a venue often is square or a combination of squares, and therefore the boundary of the area does not usually coincide with the area in which the signal can be received. With the technique in Patent Document 1, since a communication unit is installed such that the area in which the signal thereof can be received is within the venue, a portion in which the signal cannot be received exists at an edge of the venue. With this technique, if the area in which the signal from the communication unit can be received is expanded in order to reduce the portion in which the signal cannot be received, then a communication terminal that is present outside the venue can also be connected, and a state of congestion including those who are outside the venue will be grasped. With such a technique in Patent Document 1, the degree of congestion represented by the number of communication terminals will be less accurate.

It is an object of the present invention to improve the accuracy of the degree of congestion in a predetermined area represented by the number of communication terminals possessed by visitors to this area.

Solution to Problem

To achieve the above-stated object, the present invention provides An information processing apparatus including: an acquisition unit configured to acquire a status of a communication terminal capable of receiving a signal from a communication unit; a determination unit configured to determine whether the communication terminal is staying in a predetermined area, based on the status acquired by the acquisition unit; and an output unit configured to output information indicating a degree of congestion in the area in accordance with the number of communication terminals that are staying in the area according to the determination by the determination unit.

The acquisition unit may acquire, as the status, a time period during which the communication terminal can receive the signal, and the determination unit may determine that the communication terminal with the time period acquired by the acquisition unit being larger than or equal to a threshold value is staying in the area.

Furthermore, the acquisition unit may acquire, as the status, a reception strength at the time when the communication unit receives a signal from the communication terminal, and the determination unit may determine that the communication terminal with the reception strength acquired by the acquisition unit being larger than or equal to a threshold value is staying in the area.

The communication terminal may include a positioning unit configured to measure a position of the communication terminal, the acquisition unit may acquire, as the status, an accuracy of the position measured by the positioning unit, and the determination unit may determine that the communication terminal with the accuracy acquired by the acquisition unit being smaller than a predetermined level is staying in the area.

Furthermore, the communication terminal may include a positioning unit configured to measure a position of the communication terminal, the acquisition unit may acquire, as the status, a speed at which the position measured by the positioning unit changes, and the determination unit may determine that the communication terminal with the speed acquired by the acquisition unit being smaller than a threshold value is staying in the area.

The acquisition unit may acquire, as the status, access destination identification information for identifying an access destination that has been accessed by the communication terminal, and if the access destination identified by the access destination identification information acquired by the acquisition unit is a predetermined access destination, the determination unit may determine that the communication terminal that has accessed the access destination is staying in the area.

Furthermore, the acquisition unit may acquire, as the status, program identification information for identifying a program that has been executed by the communication terminal, and if the program identified by the program identification information acquired by the acquisition unit is a predetermined program, the determination unit may determine that the communication terminal that has executed the program is staying in the area.

The communication terminal may include a positioning unit configured to measure a position of the communication terminal, the acquisition unit may acquires, as the status, a reception strength at the time when the communication unit receives a signal from the communication terminal, a time period during which the communication terminal can receive the signal, and an accuracy of the position measured by the positioning unit, and the determination unit may determine that a first communication terminal with the reception strength acquired by the acquisition unit being larger than or equal to a threshold value and, among communication terminals with the reception strength acquired being smaller than the threshold value, a second communication terminal with the time period acquired by the acquisition unit being larger than or equal to a threshold value and with the accuracy acquired by the acquisition unit being larger than or equal to a threshold value, are staying in the area.

Furthermore, the communication terminal may include a positioning unit configured to measure a position of the communication terminal, the acquisition unit may acquire, as the status, a reception strength at the time when the communication unit receives a signal transmitted from the communication terminal, the position measured by the positioning unit, and an accuracy of the measured position, and the determination unit may determine that a third communication terminal with the reception strength acquired by the acquisition unit being larger than or equal to a threshold value and, among communication terminals with the reception strength acquired being smaller than the threshold value, a fourth communication terminal with the accuracy acquired by the acquisition unit being larger than or equal to a threshold value and with the position acquired by the acquisition unit being in a prescribed area are staying in the area.

The present invention provides an information processing method including: an acquisition step of acquiring a status of a communication terminal capable of receiving a signal from a communication unit, by an information processing apparatus; a determination step of determining whether the communication terminal is staying in a predetermined area, based on the status acquired in the acquisition step, by the information processing apparatus; and an output step of outputting information indicating a degree of congestion in the area in accordance with the number of communication terminals that are staying in the area according to the determination in the determination step, by the information processing apparatus.

Effects of Invention

According to the present invention, the accuracy of the degree of congestion in a predetermined area represented by the number of communication terminals possessed by visitors to this area can be improved.

Brief Description of Drawings

FIG. 1 is a diagram showing an overall configuration of an information processing system.
FIG. 2 is a diagram showing a hardware configuration of an access point.
FIG. 3 is a diagram showing a hardware configuration of a communication terminal.
FIG. 4 is a diagram showing a hardware configuration of an information processing apparatus.
FIG. 5 is a diagram showing a functional configuration realized by the information processing apparatus.
FIG. 6 is a sequence diagram showing operations of apparatuses during congestion degree information provision processing.
FIG. 7 is a diagram showing an exemplary state in which a predetermined area is congested.
FIG. 8 is a diagram showing exemplary receivable time periods acquired in the example in FIG. 7.
FIG. 9 is a diagram showing an exemplary state in which a predetermined area is congested.
FIG. 10 is a diagram showing a restaurant shown in FIG. 9, as viewed horizontally.
FIG. 11 is a diagram showing exemplary reception strengths acquired in the example in FIGS. 9 and 10.
FIG. 12 is a sequence diagram showing operations of apparatuses during accumulation processing.
FIG. 13 is a diagram showing an exemplary state in which a predetermined area is congested.
FIG. 14 is a diagram showing exemplary positioning errors acquired in the example in FIG. 13.
FIG. 15 is a diagram showing an exemplary state in which a predetermined area is congested.
FIG. 16 is a diagram showing exemplary moving speeds acquired in the example in FIG. 15.
FIG. 17 is a sequence diagram showing operations of apparatuses during accumulation processing.
FIG. 18 is a diagram showing an exemplary state in which a predetermined area is congested.
FIG. 19 is a diagram showing an exemplary state in which a predetermined area is congested.
FIG. 20 is a diagram showing an exemplary state in which a predetermined area is congested.
FIG. 21 is a diagram showing an exemplary area in which receivable ranges overlap one another.
FIG. 22 is a table for illustrating exemplary communication unit identification information to be acquired.
FIG. 23 is a diagram showing an exemplary state in which a predetermined area is congested.

Description of Embodiments

First Embodiment

Hereinafter, a first embodiment of the present invention will be described with reference to the drawings.

Configuration

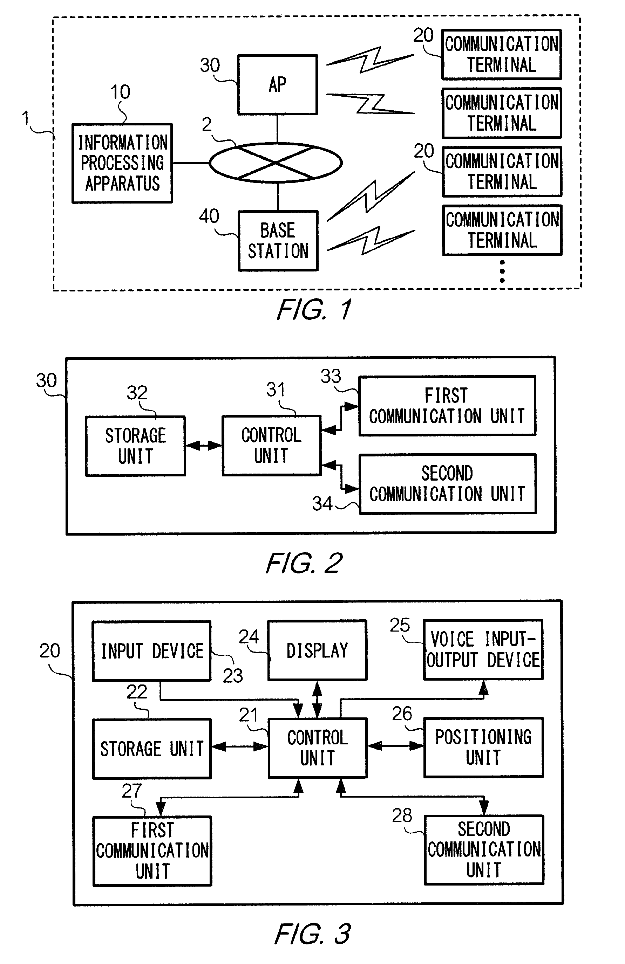

FIG. 1 is a diagram showing an overall configuration of information processing system 1. Information processing system 1 is a system for providing a user with information (hereinafter referred to as "congestion degree information") indicating a degree of congestion in a predetermined area such as a shop or a venue. Information processing system 1 is provided with network 2, information processing apparatus 10, a plurality of communication terminals 20, AP (access point) 30, and base station 40. Network 2 includes a mobile communication network, the Internet, or the like. Information processing apparatus 10, AP 30, and base station 40 are connected to network 2.

Base station 40 is a communication unit having a function of performing wireless communication based on a mobile communication standard. AP 30 is a communication unit having a function of performing wireless communication based on a wireless LAN (Local Area Network) standard. Communication terminal 20 is a terminal such as a mobile phone or a smartphone possessed by the user, and has a function (wireless communication function) of performing wireless communication based on both the mobile communication standard and the wireless LAN standard. Communication terminal 20 wirelessly communicates with base station 40 and AP 30 using this function. Information processing apparatus 10 is a computer that is provided with a CPU (Central Processing Unit) and outputs the aforementioned congestion degree information to communication terminal 20, for example.

Subsequently, a configuration of the apparatuses provided in information processing system 1 will be described.

FIG. 2 is a diagram showing a hardware configuration of AP 30. AP 30 is provided with control unit 31, storage unit 32, first communication unit 33, and second communication unit 34. Control unit 31 is provided with a CPU, a ROM (Read Only Memory), a RAM (Random Access Memory), and a real-time clock. The real-time clock has a function of calculating the current date and time. The CPU controls operations of units provided in AP 30 by using the RAM as a work area and executing programs stored in the ROM or storage unit 32. The programs include a program for causing AP 30 to function as a DHCP (Dynamic Host Configuration Protocol) server. Control unit 31 assigns an IP (Internet Protocol) address to a communication partner unit (e.g., communication terminal 20) and releases the assigned IP address by executing this program. Control unit 31 assigns an IP address to a unit authenticated based on the wireless LAN standard. Control unit 31 also releases an IP address of a unit that has stopped the wireless LAN function and a unit that can no longer receive a signal transmitted by AP 30.

Control unit 31 causes storage unit 32 to store communication history (log) including an assigned IP address, the date and time of the assignment (hereinafter referred to as "assignment date and time"), the date and time when the assigned IP address is released (hereinafter referred to as "release date and time"), and an MAC (Media Access Control) address of the unit to which the IP address is assigned, in association with one another. Storage unit 32 is a storage unit such as a flash memory or a hard disk, and stores data, programs, and the like used by control unit 31 for performing control. Storage unit 32 stores a list of IP addresses to be assigned to partner units with which control unit 31 communicates. Storage unit 32 stores the aforementioned communication history. First communication unit 33 is provided with a communication circuit for communicating with a unit connected based on the wireless LAN standard. Second communication unit 34 is provided with a communication circuit for performing communication via network 2.

FIG. 3 is a diagram showing a hardware configuration of communication terminal 20. Communication terminal 20 is a computer provided with control unit 21, storage unit 22, input device 23, display 24, voice input-output device 25, positioning unit 26, first communication unit 27, and second communication unit 28. Control unit 21 is provided with a CPU, a ROM, a RAM, and a real-time clock. The CPU controls operations of units in communication terminal 20 by using the RAM as a work area and executing programs stored in the ROM or storage unit 22. The real-time clock has a function of calculating the current date and time. Storage unit 22 is a storage unit such as a flash memory or a hard disk, and stores data, programs, and the like used by control unit 21 for performing control. Input device 23 is provided with operators such as a multiple keys and a touch sensor, and supplies an operational signal according to a user operation to control unit 21. Control unit 21 performs processing according to the operational signal. Display 24 is a display unit having a display surface, and displays an image or the like indicated by data stored in storage unit 22 on the display surface in accordance with an instruction from control unit 21. Voice input-output device 25 has a speaker, a microphone, a voice processing circuit, and the like, and inputs and outputs voice in a call.

Positioning unit 26 is condifured to measure the position (hereinafter referred to as a "terminal position") of communication terminal 20 using GPS (Global Positioning System) technology. Specifically, positioning unit 26 measures, as the terminal position, the latitude and longitude of the position where communication terminal 20 is located, by receiving a signal from a GPS satellite. Positioning unit 26 also calculates an error (hereinafter referred to as a "positioning error") between the correct latitude and longitude of the position where communication terminal 20 is located and the measured terminal position, based on a state of reception of the signal from the GPS satellite. Positioning unit 26 generates positioning data indicating the measured terminal position and the positioning error, and supplies the positioning data to control unit 21. First communication unit 27 is provided with a communication circuit for wirelessly communicating data based on the wireless LAN standard, and wirelessly communicates with AP 30 shown in FIG. 1, for example. First communication unit 27 is provided with a storage unit that stores data, and stores the aforementioned MAC address. First communication unit 27 is powered on and off under the control of control unit 11. The wireless communication function of communication terminal 20 is enabled when the power of first communication unit 27 is in an on state. Second communication unit 28 is provided with a communication circuit for communicating data based on the mobile communication standard, and wirelessly communicates with base station 40 shown in FIG. 1, for example.

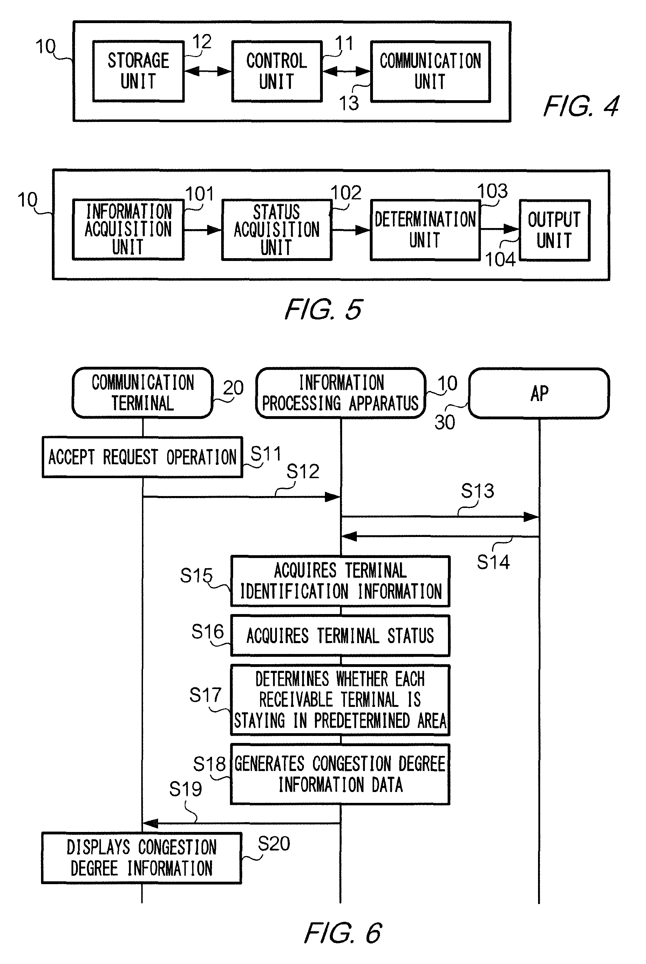

FIG. 4 is a diagram showing a hardware configuration of information processing apparatus 10. Information processing apparatus 10 is provided with control unit 11, storage unit 12, and communication unit 13. Control unit 11 is provided with a CPU, a ROM, a RAM, and a real-time clock. The CPU controls operations of units provided in information processing apparatus 10 by using the RAM as a work area and executing programs stored in the ROM or storage unit12. The real-time clock has a function of calculating the current date and time. Storage unit 12 is a storage unit such as a flash memory or a hard disk, and stores data and programs used by control unit 11 for performing control. Storage unit 12 also stores data indicating a prescribed numeric value such as a threshold value used in information processing apparatus 10. Communication unit 13 is provided with a communication circuit for performing communication via network 2, and exchanges data with control unit 11. Control unit 11 exchanges data with base station 40 and AP 30 via communication unit 13.

Information processing system 1 performs processing (hereinafter referred to as "congestion degree information provision processing") for providing the user with the congestion degree information, based on the above-described hardware configuration. Storage unit 12 in information processing apparatus 10 stores a program for performing the congestion degree information provision processing. The following function is realized by control unit 11 in information processing apparatus 10 executing this program and controlling the units shown in FIG. 4.

FIG. 5 is a diagram showing a functional configuration realized by information processing apparatus 10. Information processing apparatus 10 is provided with information acquisition unit 101, status acquisition unit 102, determination unit 103, and output unit 104.

Information acquisition unit 101 acquires information (hereinafter referred to as "terminal identification information") for identifying communication terminal 20 (hereinafter referred to as a "receivable terminal") that can receive a signal from a communication unit. In the present embodiment, information acquisition unit 101 performs this acquisition while assuming AP 30 as the communication unit. Information acquisition unit 101 is a function realized by control unit 11 and communication unit 13 shown in FIG. 4 in cooperation with each other, and performs the acquisition by the following method, for example.

Control unit 11 gives AP 30 a request for the aforementioned communication history via communication unit 13. AP 30 transmits history data indicating the communication history in response to the request. Control unit 11 receives the history data transmitted from AP 30, via communication unit 13. Control unit 11 extracts an MAC address that is not associated with the release date and time from MAC addresses indicated by the received history data. Communication terminal 20 indicated by the MAC address that is thus extracted is a communication terminal that is assigned, by AP 30, the IP address that has not been released yet, and can receive the signal from the communication unit. Information acquisition unit 101 acquires the MAC address extracted as described above, as terminal identification information, i.e., information for identifying the receivable terminal. Information acquisition unit 101 supplies the acquired terminal identification information (specifically, the MAC address of communication terminal 20) to status acquisition unit 102.

Status acquisition unit 102 acquires the status (hereinafter referred to as "terminal status") of communication terminal 20. Status acquisition unit 102 acquires the terminal status of communication terminal 20 identified by the terminal identification information acquired by information acquisition unit 101. The terminal status is the status that can be used for determining whether a receivable terminal is staying in a predetermined area, among various kinds of status of communication terminal 20, and examples thereof include a time period (hereinafter referred to as a "receivable time period") during which the receivable terminal can receive the signal from the communication unit, and a reception strength at the time when the communication unit receives a signal from communication terminal 20. The predetermined area mentioned here is an area for which the congestion degree is indicated in information processing system 1, and examples thereof include a shop and a venue. However, the predetermined area is not limited to the very area occupied by a shop or a venue, and possibly is a part of the area or include the surroundings thereof. In the present embodiment, a range (hereinafter referred to as a "receivable range") in which communication terminal 20 can receive the signal from the communication unit is defined as the predetermined area, and status acquisition unit 102 acquires the aforementioned receivable time period as the terminal status. Status acquisition unit 102 is a function realized by control unit 11 and communication unit 13 shown in FIG. 4 in cooperation with each other, and performs the acquisition by the following method, for example.

Control unit 11 gives the request for the communication history as mentioned above regarding information acquisition unit 101, and receives the history data transmitted from AP 30 via communication unit 13. Note that control unit 11 may use the history data received by information acquisition unit 101 as-is. Control unit 11 calculates a time period from the assignment date and time associated with the MAC address supplied from information acquisition unit 101 in the history data until the current date and time. Communication terminal 20 indicated by this MAC address is the receivable terminal identified by the terminal identification information acquired by information acquisition unit 101, and the IP address thereof has not been released. That is to say, the time period that is thus calculated indicates the time period during which the IP address is kept assigned to communication terminal 20. Since the IP address is released if communication terminal 20 becomes unable to receive the signal from AP 30 as mentioned above, the time period during which the IP address is kept assigned to communication terminal 20 indicates, in other words, the time period during which communication terminal 20 can receive the signal from AP 30 (i.e., the receivable time period). Status acquisition unit 102 acquires the time period calculated as described above, as the receivable time period. Status acquisition unit 102 supplies, to determination unit 103, data in which the acquired receivable time period is associated with the MAC address of communication terminal 20 corresponding to the receivable time period.

Determination unit 103 determines whether communication terminal 20 (the receivable terminal) is staying in the aforementioned predetermined area, based on the terminal status acquired by status acquisition unit 102. In the present embodiment, determination unit 103 performs this determination based on the receivable time period acquired by status acquisition unit 102. Specifically, determination unit 103 determines that a receivable terminal with the receivable time period acquired being larger than or equal to a threshold value (e.g., 5 minutes or 10 minutes) is staying in the predetermined area. Determination unit 103 is a function realized by control unit 11. Determination unit 103 supplies, to output unit 104, data indicating the MAC address associated with a receivable time period that is larger than or equal to the threshold value, among the receivable time periods indicated by the data supplied from status acquisition unit 102, as data indicating the receivable terminal that is staying in the predetermined area according to the determination.

Output unit 104 outputs the congestion degree information of the predetermined area in accordance with the number (hereinafter referred to as a "staying terminal number") of receivable terminals that are staying in the predetermined area according to the determination by determination unit 103. Output unit 104 is a function realized by control unit 11 and communication unit 13 in cooperation with each other, and performs this output by the following method, for example. Control unit 11 calculates number Q of people causing congestion in the predetermined area, using the staying terminal number P and Equation (1) below.

$$Q = P \times k \ ...(1)$$

k is a prescribed coefficient used for calculating the congestion degree information, and represents an inverse number of the proportion of those who possess communication terminal 20 whose wireless LAN function is enabled to those who are located in the predetermined area. For example, assuming the proportion is 0.5, k is 2.0. Coefficient k is prescribed based on the number of terminals staying in the predetermined area and the result of manually counting the number of those who are actually located in the predetermined area, for example. Control unit 11 outputs data indicating calculated number Q as congestion degree information data indicating the congestion degree information, via communication unit 13.

Operations

Information processing system 1 performs the above-described congestion degree information provision processing based on the above configuration.

FIG. 6 is a sequence diagram showing operations of the apparatuses during the congestion degree information provision processing. The congestion degree information provision processing is started upon the user who possesses communication terminal 20 performing an operation (request operation) for giving a request for the congestion degree information of the predetermined area. Initially, communication terminal 20 accepts the request operation (step S11). Next, communication terminal 20 transmits congestion degree information request data indicating this request to information processing apparatus 10 (step S12). Communication terminal 20 performs this transmission via base station 40 shown in FIG. 1, for example.

Information processing apparatus 10, upon receiving the congestion degree information request data in step S12, transmits, to AP 30, history request data for giving a request for the history data (step S13). AP 30, upon receiving the history request data, transmits the stored history data to information processing apparatus 10 (step S14). Information processing apparatus 10, upon receiving the history data, acquires the terminal identification information of communication terminal 20 (the receivable terminal) that can receive the signal from the communication unit, based on the MAC address and the release date and time indicated by the history data (step S15). Steps S13 and S15 are operations performed by information acquisition unit 101 shown in FIG. 5. Next, information processing apparatus 10 acquires the terminal status for determining whether the receivable terminal identified by the acquired terminal identification information is staying in the predetermined area (step S16). In the present embodiment, information processing apparatus 10 acquires, as the terminal status, the aforementioned receivable time period (the time during which the receivable terminal can receive the signal from the communication unit), based on the history data received in step S14. Step S16 is an operation performed by status acquisition unit 102.

Subsequently, information processing apparatus 10 determines whether the receivable terminal is staying in the predetermined area, based on the terminal status acquired in step S16 (step S17). In the present embodiment, information processing apparatus 10 determines that a receivable terminal with the receivable time period acquired being larger than or equal to the threshold value is staying in the predetermined area. Step S17 is an operation performed by determination unit 103. Then, information processing apparatus 10 generates the congestion degree information data indicating the congestion degree information of the predetermined area, based on the result of the determination in step S17 (step S18). Specifically, information processing apparatus 10 generates, as the congestion degree information data, data indicating the number of people causing congestion in the predetermined area that is obtained by substituting, in aforementioned Equation (1), the number of receivable terminals (staying terminal number) that are staying in the predetermined area according to the determination. Information processing apparatus 10 outputs the generated congestion degree information data to communication terminal 20 that transmitted the congestion degree information request data (step S19). Steps S18 and S19 are operations performed by output unit 104. Communication terminal 20, upon receiving the congestion degree information data in step S19, displays the congestion degree information (in this example, the number of people causing congestion in the predetermined area) indicated by the congestion degree information data (step S20). The congestion degree information is provided to the user as a result of the congestion degree information provision processing being thus performed.

The congestion degree information provided as described above will now be described, taking examples of the congestion degree.

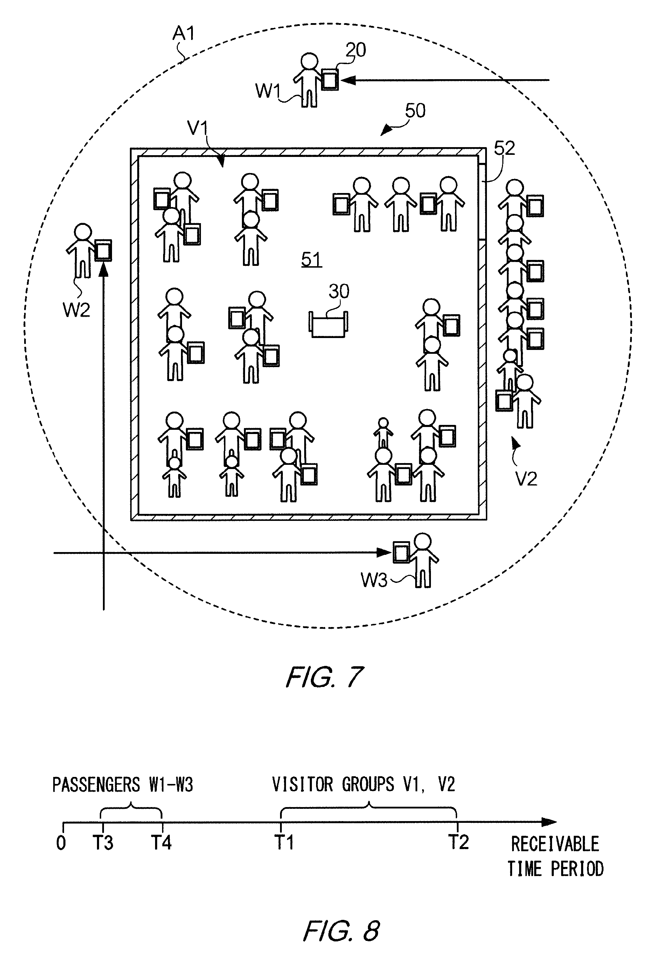

FIG. 7 is a diagram showing an exemplary state in which the predetermined area is congested. In this example, restaurant 50 in a building that is square as viewed from above is shown. In inside space 51 of restaurant 50, visitors in visitor group V1 are having a meal or waiting for an attendant. Also, visitors in visitor group V2 are standing in a line to visit restaurant 50 outside entrance 52 of restaurant 50. Visitor groups V1 and V2, when visiting restaurant 50, will stay for a time period combining a time period for standing in a line to be seated and a time period for having a meal. Also, passengers W1 to W3 are moving toward respective destinations, outside restaurant 50.

AP 30 is installed at the center of the inside space of restaurant 50. In FIG. 7, the aforementioned receivable range, i.e., a range in which communication terminal 20 can receive the signal from AP 30 is denoted by A1. Receivable range A1 is the predetermined area in the present embodiment, as mentioned above. Receivable range A1 has a circular shape as viewed from above. Receivable range A1 includes an entire area including both inside space 51 and the place where the visitors in visitor group V2 are standing in a line. That is to say, all communication terminals 20 possessed by the visitors to restaurant 50 can receive the signal from AP 30. In other words, an access point that transmits a signal having a strength with which the signal can be received in an entire area where the visitors to restaurant 50 will stay is installed as AP 30 in inside space 51. In this example, more than half of the visitors in visitor groups V1 and V2 possess communication terminals 20. All passengers W1 to W3 also possess communication terminals 20. In this example, the wireless LAN function is enabled in all those communication terminals 20. Accordingly, information processing apparatus 10 acquires the terminal identification information of all those communication terminals 20 located in receivable range A1.

Communication terminals 20 possessed by visitor groups V1 and V2 among receivable terminals whose terminal identification information has been acquired will stay in receivable range A1 (the predetermined area in the present embodiment) for several tens of minutes to more than one hour from when each visitor stands in a line for restaurant 50 until when he/she finishes the meal. For this reason, the receivable time period of these communication terminals 20 is at least several tens of minutes. On the other hand, since passengers W1 to W3 only pass through receivable range A1, communication terminals 20 possessed thereby also only pass through receivable range A1 and will not stay therein. For this reason, the receivable time period of these communication terminals 20 is several dozen seconds to several minutes at most.

FIG. 8 is a diagram showing exemplary receivable time periods acquired in the example in FIG. 7. In this example, time periods in a range from T1 to T2 are acquired as the receivable time periods of communication terminals 20 possessed by visitor groups V1 and V2, and time periods in a range from T3 to T4 are acquired as the receivable time periods of communication terminals 20 possessed by passengers W1 to W3. The lengths of these time periods have a relationship in which T3<T4<T1<T2. In information processing apparatus 10, a time period with which these two kinds of receivable time period can be distinguished from each other, i.e., a time period between T4 and T1 (e.g., 5 minutes or 10 minutes) is defined as a threshold value used by determination unit 103.

Information processing apparatus 10 uses the threshold value that is thus defined to determine that communication terminals 20 possessed by visitor groups V1 and V2 that are visitors to restaurant 50 are staying in the predetermined area (receivable range A1), and determine that communication terminals 20 possessed by passengers W1 to W3 are not staying in the predetermined area. Thus, the present embodiment can provide the congestion degree information in which those who only pass through the predetermined area, such as passengers W1 and W2, are not counted. Here, if a configuration in which the determination based on the receivable time period is not performed is employed, the congestion degree information in which these passengers are also counted would be provided to the user. According to the present embodiment, as compared with such a configuration, the accuracy of the degree of congestion in a predetermined area represented by the number of communication terminals possessed by visitors to this area can be improved.

Note that the threshold value used by determination unit 103 need only be defined in accordance with the size of receivable range A1, an average time period during which users who visit the predetermined area stay in the predetermined area, the environment around the predetermined area, and the like. For example, if receivable range A1 has a certain size, a longer time period is defined as the threshold value, as compared with the case where receivable range A1 is smaller than the certain size. If an average time period during which users stay takes a certain value, a longer time period is defined as the threshold value, as compared with the case where the average time period takes a value smaller than the certain value. If the surroundings of the predetermined area are a downtown area (i.e., a congested area where it takes more time to walk), a longer time period is defined as the threshold value, as compared with the case where the surroundings are an unfrequented street.

Second Embodiment

In a second embodiment, a reception strength at the time when the communication unit receives a signal from communication terminal 20 is used as the aforementioned terminal status for determining whether the receivable terminal is staying in the predetermined area. The difference from the first embodiment will be mainly described below.

AP 30 stores, as communication history, a reception strength when receiving the signal from communication terminal 20, in addition to the above-described communication history. Specifically, AP 30 stores the reception strength at predetermined time intervals (e.g., every one second) after being connected to communication terminal 20, in association with the MAC address of communication terminal 20 and the current date and time. As a result, the MAC address of certain communication terminal 20 is associated with a plurality of reception strengths.

Status acquisition unit 102 in the present embodiment is a function realized by control unit 11 and communication unit 13 in cooperation with each other, as in the first embodiment. Control unit 11 calculates an average value of the reception strengths associated with the MAC address indicated by the history data transmitted from AP 30, for example. Note that control unit 11 may calculate an average value of the reception strengths during a predetermined past time period (e.g., 10 minutes). This average value indicates the reception strength of communication terminals 20 indicated by the MAC addresses associated with the reception strengths used in the calculation. Thus, status acquisition unit 102 acquires, as the terminal status, the reception strength at the time when AP 30 receives the signal from communication terminal 20.

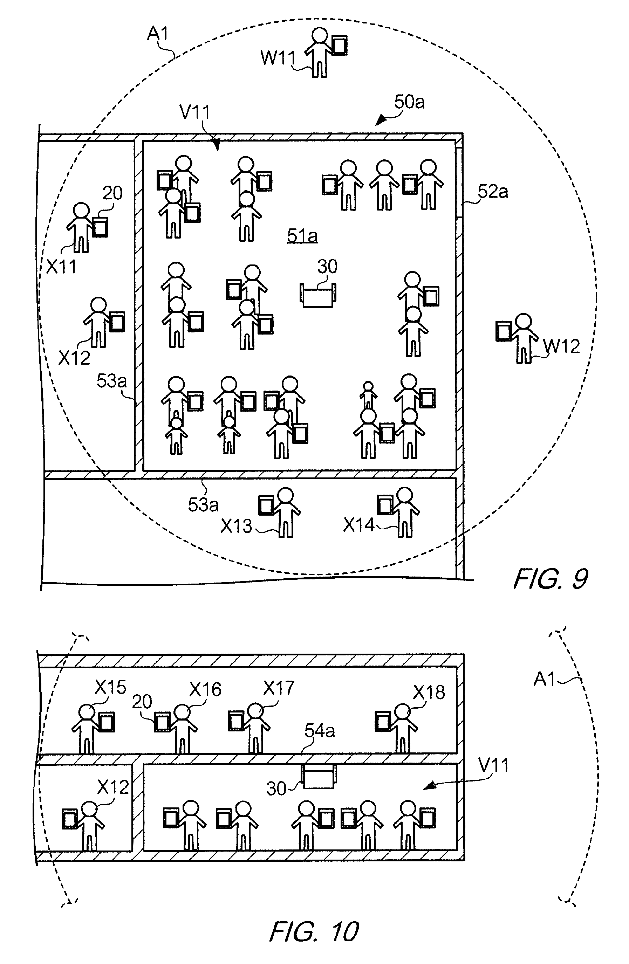

Determination unit 103 determines that communication terminal 20 with the reception strength acquired by status acquisition unit 102 being larger than or equal to the threshold value is staying in the predetermined area. The reception strength acquired by status acquisition unit 102 will now be described with reference to FIGS. 9, 10, and 11.

FIG. 9 is a diagram showing an exemplary state in which the predetermined area is congested. In this example, restaurant 50a having the same shape as that of restaurant 50 in FIG. 7 is shown. AP 30 is installed at the center of inside space 51a of restaurant 50a, as in restaurant 50. Restaurant 50a is different from restaurant 50 in that restaurant 50a is adjacent to other shops over walls 53a. Visitors (hereinafter referred to as "other-shop visitors") X11 to X14 of the shops are in the inside space of these shops. In inside space 51a of restaurant 50a, visitors in visitor group V11 to restaurant 50a are having a meal or waiting for an attendant. On the other hand, unlike in FIG. 7, no visitors are standing in a line outside entrance 52a of restaurant 50a, and only passengers W11 and W12 are moving. All of them are located in receivable range A1 (an area where communication terminal 20 can receive the signal from AP 30).

FIG. 10 is a diagram showing restaurant 50a shown in FIG. 9, as viewed horizontally. Restaurant 50a is on the first floor of a two-story building, and other-shop visitors X15 to X18 are also in another shop on the second floor that is adjacent to restaurant 50a over ceiling 54a. These other-shop visitors are also located in receivable range A1.

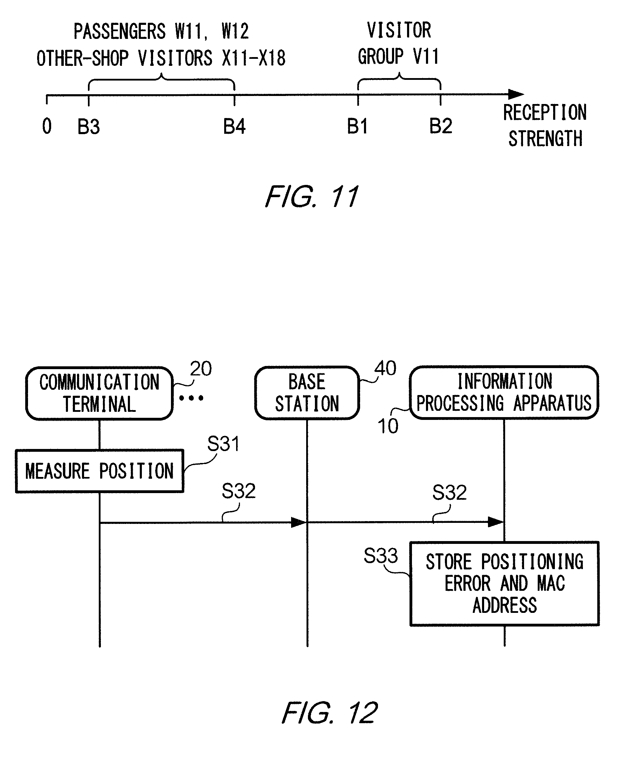

FIG. 11 is a diagram showing exemplary reception strengths acquired in the example in FIGS. 9 and 10. In this example, values in a range from B1 to B2 are acquired as the reception strengths of communication terminals 20 possessed by visitor group V11, and values in a range from B3 to B4 are acquired as the reception strengths of communication terminals 20 possessed by other people (passengers W11 and W12 and other-shop visitors X11 to X18). The magnitudes of these reception strengths have a relationship in which B3<B4<B1<B2.

In the present embodiment, inside space 51a enclosed by wall 53a and ceiling 54a is defined as the predetermined area. In the example in FIGS. 9 and 10, there are no obstacle such as a wall or a ceiling that weakens the strength of the signal transmitted by communication terminal 20, between AP 30 and communication terminals 20 possessed by visitor group V11 and staying in the predetermined area. On the other hand, there are obstacles, namely wall 53a and ceiling 54a, between AP 30 and communication terminals 20 that are possessed by other people and are not staying in the predetermined area. That is to say, in this example, the predetermined area is separated from other areas by the obstacles, which are wall 53a and ceiling 54a. For this reason, the reception strengths of communication terminals 20 that are not staying in the predetermined area (communication terminals 20 possessed by the passengers and the other-shop visitors) are smaller than the reception strengths of communication terminals 20 staying in the predetermined area (communication terminals 20 possessed by visitor group V11), as shown in FIG. 11.

In information processing apparatus 10, a value with which these two types of reception strength are distinguished from each other (in the example in FIG. 11, a value of reception strength between B4 and B1) is defined as the threshold value used by determination unit 103. Determination unit 103 uses the threshold value that is thus defined to determine that communication terminals 20 possessed by visitors in visitor group V11 to restaurant 50a are staying in the predetermined area (inside space 51a), and determine that communication terminals 20 possessed by the passengers and the other-shop visitors are not staying in the predetermined area. Thus, the present embodiment can provide the congestion degree information in which those who only pass through outside the predetermined area, such as passengers W11 and W12, or those who are staying in areas other than the predetermined area, such as other-shop visitors X11 to X18, are not counted. Here, if a configuration in which the determination based on the reception strength is not performed is employed, the congestion degree information in which these people are also counted would be provided to the user. According to the present embodiment, as compared with such a configuration, the accuracy of the degree of congestion in a predetermined area represented by the number of communication terminals possessed by visitors to this area can be improved.

Third Embodiment

In a third embodiment, the accuracy of the position measured by positioning unit 26 provided in communication terminal 20 is used as the aforementioned terminal status. The difference from the first embodiment will be mainly described below.

In information processing system 1 in the present embodiment, accumulation processing in which information processing apparatus 10 accumulates data indicating a positioning error in the measurement of the position of positioning unit 26 provided in each communication terminal 20, i.e., the accuracy of the measured position, is performed.

FIG. 12 is a sequence diagram showing operations of the apparatuses during the accumulation processing. Although FIG. 12 shows only one of a plurality of communication terminals 20, other communication terminals 20 also perform the same operations as those shown in this diagram.

The accumulation processing is performed at prescribed time at predetermined time intervals (i.e., every 30 seconds). Initially, communication terminal 20 measures the terminal position when the prescribed time comes (step S31). Step S31 is an operation performed by positioning unit 26 shown in FIG. 3. Next, communication terminal 20 transmits positioning data indicating the measured terminal position and a positioning error thereof, together with address data indicating the MAC address of communication terminal 20, to information processing apparatus 10 via base station 40 (step S32). Step S32 is an operation performed by control unit 21 and second communication unit 28 in cooperation with each other. Subsequently, information processing apparatus 10 stores the positioning error indicated by the positioning data received in step S32 and the MAC address indicated by the similarly received address data in association with each other (step S33). The data indicating the positioning error is accumulated in information processing apparatus 10 as a result of a plurality of communication terminals 20 and information processing apparatus 10 performing the above-described accumulation processing at the predetermined time intervals.

The above operation in step S33 is performed by status acquisition unit 102 shown in FIG. 5. In step S16 in FIG. 6, status acquisition unit 102 extracts positioning errors stored during a predetermined past time period (e.g., 5 minutes) including the latest positioning error, from among the positioning errors corresponding to the terminal identification information (i.e., the MAC addresses of the receivable terminals) acquired in step S15. Then, status acquisition unit 102 calculates an average value of the extracted positioning errors. The average value of the positioning errors that is thus calculated represents the accuracy of the positions measured by positioning units 26 in communication terminals 20 having the MAC addresses corresponding to these positioning errors. Status acquisition unit 102 thus acquires the position accuracy as the terminal status.

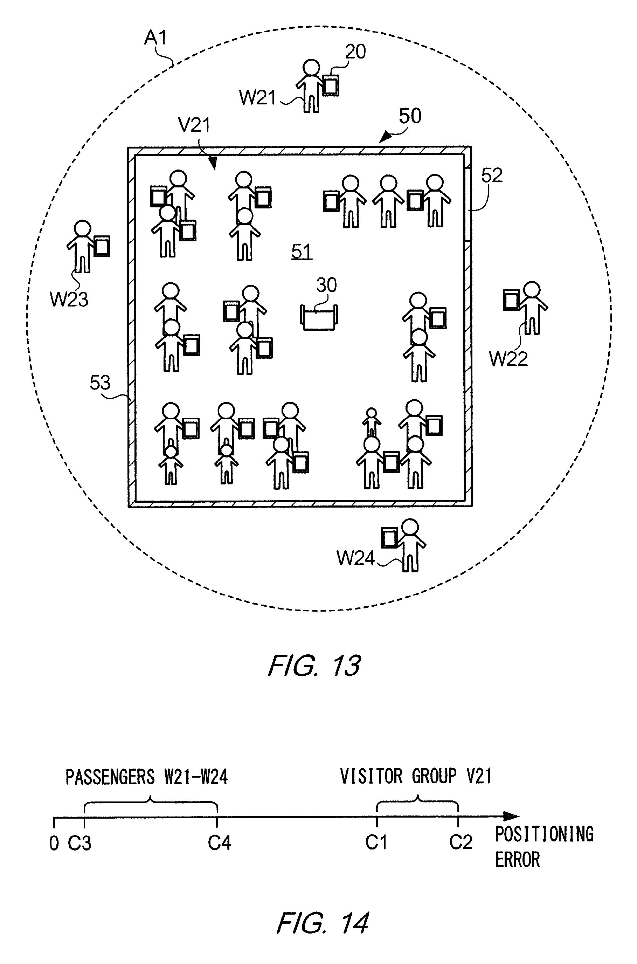

Determination unit 103 determines in step S17 that communication terminal 20 with the accuracy acquired by status acquisition unit 102 being smaller than a predetermined level is staying in the predetermined area. The position accuracy acquired by status acquisition unit 102 will now be described with reference to FIGS. 13 and 14.

FIG. 13 is a diagram showing an exemplary state in which the predetermined area is congested. In this example, restaurant 50 in FIG. 7 is shown. In inside space 51 of restaurant 50, visitors in visitor group V21 to restaurant 50 are having a meal or waiting for an attendant. Also, passengers W21 to W24 are moving toward the respective destinations outside restaurant 50. Meanwhile, in this example, no visitors are standing in a line outside entrance 52 of restaurant 50, unlike in FIG. 7. Visitor group V21 and passengers W21 to W24 are all located in receivable range A1.

FIG. 14 is a diagram showing exemplary positioning errors acquired in the example in FIG. 13. In this example, values in a range from C1 to C2 are acquired as the positioning errors of communication terminals 20 possessed by visitor group V21, and values in a range from C3 to C4 are acquired as the positioning errors of communication terminals 20 possessed by passengers W21 to W24. The magnitudes of these positioning errors have a relationship in which $C3<C4<C1<C2$.

In the present embodiment, inside space 51 is defined as the predetermined area, as in the second embodiment. In the example in FIG. 13, obstacles such as wall 53 and a ceiling that weaken the intensity of radio waves from GPS satellites (not shown) always exist between communication terminals 20 staying in the predetermined area and all these GPS satellites. On the other hand, since communication terminals 20 possessed by passengers W21 to W24 and not staying in the predetermined area are located outdoors, these communication terminals 20 can receive radio waves that have not transmitted through the obstacles such as the wall, from some of the GPS satellites. For this reason, the positioning errors of communication terminals 20 that are not staying in the predetermined area (communication terminals 20 possessed by passengers W21 to W24) are smaller than the positioning errors of communication terminals 20 staying in the predetermined area (communication terminals 20 possessed by visitor group V21), as shown in FIG. 14.

In information processing apparatus 10, a value with which these two types of positioning error are distinguished from each other, or specifically, a value of a positioning error between C4 and C1 shown in FIG. 14 is defined as a threshold value used by determination unit 103. Determination unit 103 uses the threshold value that is thus defined to determine that communication terminals 20 possessed by visitors in visitor group V21 to restaurant 50 are staying in the predetermined area (inside space 51), and determine that communication terminals 20 possessed by passengers W21 to W24 are not staying in the predetermined area. Thus, the present embodiment can provide the congestion degree information in which those who only pass through outside the predetermined area, such as passengers W21 to W24, are not counted. Here, if a configuration in which the determination based on the positioning error is not performed is employed, the congestion degree information in which these people are also counted would be provided to the user. According to the present embodiment, as compared with such a configuration, the accuracy of the degree of congestion in a predetermined area represented by the number of communication terminals possessed by visitors to this area can be improved.

Fourth Embodiment

In a fourth embodiment, the speed at which the position measured by positioning unit 26 in communication terminal 20 changes is used as the terminal status. This speed represents the speed at which communication terminal 20 moves, and will be referred to as "moving speed". The difference from the third embodiment will be mainly described below.

In information processing system 1 in the present embodiment, in step S33 of the accumulation processing shown in FIG. 12, information processing apparatus 10 stores the terminal position indicated by the positioning data received in step S32 and the MAC address indicated by the similarly received address data in association with each other. In step S16 in FIG. 6, status acquisition unit 102 extracts terminal positions stored during a predetermined past time period (e.g., 1 minute) including the latest terminal position, from among the terminal positions corresponding to the terminal identification information (the MAC addresses of the receivable terminals) acquired in step S15. Then, status acquisition unit 102 calculates a value obtained by dividing the distance between the latest terminal position and the oldest terminal position among the extracted terminal positions by the aforementioned predetermined time period. This value represents the aforementioned moving speed, and status acquisition unit 102 thus acquires, as the terminal status, the speed (moving speed) at which the position measured by positioning unit 26 in communication terminal 20 changes.

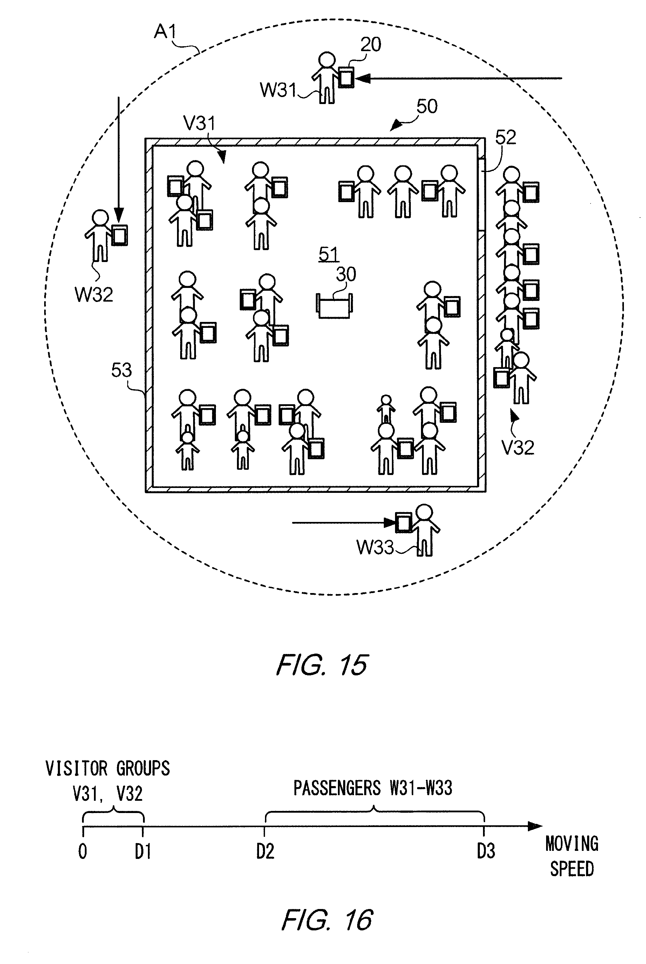

Determination unit 103 determines that communication terminal 20 with the moving speed acquired by status acquisition unit 102 being smaller than the threshold value is staying in the predetermined area. The moving speed acquired by status acquisition unit 102 will now be described with reference to FIGS. 15 and 16.

FIG. 15 is a diagram showing an exemplary state in which the predetermined area is congested. In this example, restaurant 50 in FIG. 7 is shown. In inside space 51 of restaurant 50, visitors in visitor group V31 to restaurant 50 are having a meal or waiting for an attendant, and visitors in visitor group V32 are standing in a line to visit the inside space, outside entrance 52 of restaurant 50. Also, passengers W31 to W33 are moving toward the respective destinations, outside restaurant 50. All of them are located in receivable range A1.

FIG. 16 is a diagram showing exemplary moving speeds acquired in the example in FIG. 15. In this example, values in a range from 0 to D1 are acquired as the moving speeds of communication terminals 20 possessed by visitor groups V31 and V32, and values in a range from D2 to D3 are acquired as the moving speeds of communication terminals 20 possessed by passengers W31 to W33. These moving speeds have a relationship in which 0<D1<D2<D3.

In the present embodiment, receivable range A1 is defined as the predetermined area, as in the first embodiment. In the example in FIG. 16, communication terminals 20 possessed by visitor groups V31 and V32 and staying in the predetermined area hardly move, whereas communication terminals 20 possessed by passengers W31 to W33 move together with these passengers. For this reason, the moving speeds of communication terminals 20 that are not staying in the predetermined area (communication terminals 20 possessed by passengers W31 to W33) are greater than the moving speeds of communication terminals 20 staying in the predetermined area (communication terminals 20 possessed by visitor groups V31 and V32), as shown in FIG. 16.

In information processing apparatus 10, a value with which these two types of moving speed are distinguished from each other, or specifically, a value of a moving speed between D1 and D2 shown in FIG. 16 is defined as a threshold value used by determination unit 103. Determination unit 103 uses the threshold value that is thus defined to determine that communication terminals 20 possessed by visitors in visitor groups V31 and V32 to restaurant 50 are staying in the predetermined area (receivable range A1), and determine that communication terminals 20 possessed by passengers W31 to W33 are not staying in the predetermined area. Thus, the present embodiment can provide the congestion degree information in which those who only pass through the predetermined area, such as passengers W31 to W33, are not counted. Here, if a configuration in which the determination based on the moving speed is not performed is employed, the congestion degree information in which these people are also counted would be provided to the user. According to the present embodiment, as compared with such a configuration, the accuracy of the degree of congestion in a predetermined area represented by the number of communication terminals possessed by visitors to this area can be improved.

Fifth Embodiment

In a fifth embodiment, information (hereinafter referred to as "access destination identification information") for identifying an access destination that has been accessed by communication terminal 20 is used as the terminal status. This access destination identification information is a URL or an IP address of a site that has been accessed by communication terminal 20, for example. The difference from the first embodiment will be mainly described below.

In the present embodiment, communication terminal 20 connects to AP 30 and is assigned an IP address, thereafter accesses a predetermined site in accordance with a user operation, and can connect to the Internet via AP 30 if a user ID (Identifier) and a password are input on this site. A link to content related to a shop or a venue (in the example in FIG. 7, restaurant 50) where AP 30 is installed is provided on the predetermined site.

AP 30 stores, as communication history, the access destination identification information (in this example, a URL) of the site that has been accessed by communication terminal 20, in addition to the above-described communication history. For example, AP 30 stores the time when communication terminal 20 accessed the site, the time when the access ended, the URL of the access destination, and the MAC address of communication terminal 20, in association with one another.

Status acquisition unit 102 receives history data indicating the communication history, as in the first embodiment, and extracts the URLs associated with the terminal identification information (the MAC addresses of the receivable terminals) acquired by information acquisition unit 101 from the history data. Then, status acquisition unit 102 further extracts a URL that has been accessed during a predetermined past time period (e.g., 1 hour) from among the above-extracted URLs. The URL that is thus extracted represents the access destination identification information of the access destination that has been accessed by communication terminal 20 during the predetermined past time period. Thus, status acquisition unit 102 acquires the access destination identification information of communication terminal 20 as the terminal status.

If an access destination identified by the access destination identification information acquired by status acquisition unit 102 is a predetermined access destination, determination unit 103 determines that communication terminal 20 that has accessed this access destination is staying in the predetermined area. In the present embodiment, the receivable range is defined as the predetermined area. Determination unit 103 in this case is a function realized by control unit 11 and storage unit 12 in cooperation with each other. Storage unit 12 stores a list of predetermined access destinations. A URL of the aforementioned predetermined site and a URL of content linked from this site are registered in the list. If the access destination identification information (in this example, a URL) acquired by status acquisition unit 102 is included in the list, control unit 11 determines that the URL indicates the predetermined access destination.

In the present embodiment, for example, passengers W1 to W3 shown in FIG. 7 only pass through receivable range A1. For this reason, even if an IP address is assigned to communication terminal 20, this communication terminal 20 possibly moves out of receivable range A1 while accessing the predetermined site and inputting a user ID and a password. Moreover, even if communication terminal 20 performs this operation and successfully connects to the Internet, communication terminal 20 can use it only for a short time. In contrast, since visitor groups V1 and V2 stay in receivable range A1 for several tens of minutes to more than 1 hour, visitor groups V1 and V2 have sufficient time to use the Internet in the case of performing the above-described operation and connecting to the Internet. Moreover, since the aforementioned content relates to restaurant 50 that they visit, visitor groups V1 and V2 are likely to be motivated to view the content. For this reason, communication terminals 20 possessed by visitor groups V1 and V2 are highly likely to access the aforementioned predetermined site, as compared with communication terminals 20 possessed by passengers W1 to W3.

Even if it is determined in the above-described other embodiments that communication terminal 20 is not staying in the predetermined area, it is possibly determined in the present embodiment that this communication terminal 20 is staying in the predetermined area. For example, although it is determined in the first embodiment that communication terminal 20 possessed by a visitor who has just entered receivable range A1 is not staying in the predetermined area, it is determined in the present embodiment that this communication terminal 20 is staying in the predetermined area if the user thereof immediately performs the above-described operation. Furthermore, if communication terminals 20 possessed by the other-shop visitors shown in FIG. 9 considering visiting restaurant 50a next access the aforementioned site, it is determined that these communication terminals 20 are staying in the predetermined area before visiting restaurant 50a.

A user's action of accessing the aforementioned predetermined site indicates that the user is interested in restaurant 50a. This action can be understood as a user's intention to stay in the predetermined area from now, even if the user is not staying in the predetermined area yet at this point in time. According to the present embodiment, when the user is not actually staying in the predetermined area yet, it can be determined whether the user will stay in the predetermined area, taking such an intention of the user into consideration.

Sixth Embodiment

In a sixth embodiment, program identification information for identifying a program that has been executed by communication terminal 20 is used in place of the access destination identification information used in the fifth embodiment. The program identification information mentioned here is a program name of the program, an execution file name, a predetermined program ID, or the like, for example. The difference from the fifth embodiment will be mainly described below. In information processing system 1 in the present embodiment, accumulation processing in which information processing apparatus 10 accumulates data indicating the program identification information of each communication terminal 20 is performed.

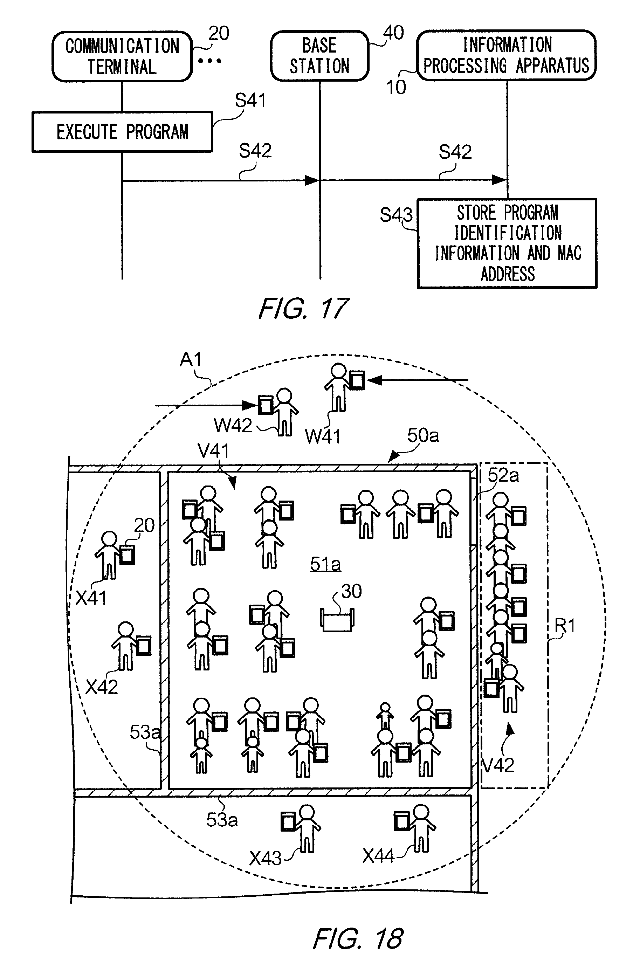

FIG. 17 is a sequence diagram showing operations of the apparatuses during the accumulation processing in the present embodiment. Although FIG. 17 shows only one of a plurality of communication terminals 20, other communication terminals 20 also perform the same operations as those shown in this diagram. This accumulation processing is carried out upon the user performing an operation for executing a program on communication terminal 20.

Initially, communication terminal 20 executes a program in accordance with a user operation (step S41). Step S41 is an operation performed by control unit 21 and input device 23 shown in FIG. 3. Next, communication terminal 20 transmits identification information data indicating the program identification information of an executed program, together with address data indicating the MAC address of communication terminal 20, to information processing apparatus 10 via base station 40 (step S42). Step S42 is an operation performed by control unit 21 and second communication unit 28 in cooperation with each other. Subsequently, information processing apparatus 10 stores the program identification information indicated by the identification information data received in step S42 and the MAC address indicated by the similarly received address data, in association with each other (step S43). Data indicating the program identification information is accumulated in information processing apparatus 10 as a result of the accumulation processing being carried out every time the user performs the operation for executing the program.

The above operation in step S43 is performed by status acquisition unit 102. In step S16 in FIG. 6, status acquisition unit 102 extracts the program identification information stored during a predetermined past time period (e.g., 10 minutes) from among the program identification information corresponding to the terminal identification information (the MAC addresses of the receivable terminals) acquired in step S15. The program identification information that is thus extracted indicates a program executed by communication terminal 20 during the predetermined past time period. Status acquisition unit 102 thus acquires, as the terminal status, the program identification information for identifying a program that has been executed by communication terminal 20.

If the program identified by the program identification information acquired by status acquisition unit 102 is a predetermined program, determination unit 103 determines that communication terminal 20 that has executed this program is staying in the predetermined area. In the present embodiment, the receivable range is defined as the predetermined area. Determination unit 103 stores a list of predetermined program identification information. The program identification information of predetermined programs that are unlikely to be executed when the user is walking is registered in the list. Examples of such programs include programs that need detailed operations (by both hands in some case), such as a fighting game, a shooting game, and image or music editing software. On the contrary, programs for making a call and for listening to music can be used while walking, and are therefore not registered in the list. If the program identification information acquired by status acquisition unit 102 is included in the list, determination unit 103 determines that the program identification information indicates the predetermined program.

According to the present embodiment, it can be determined whether communication terminal 20 is staying in the predetermined area, in accordance with the program executed by communication terminal 20.

Seventh Embodiment

In a seventh embodiment, the receivable time period described in the first embodiment, the reception strength described in the second embodiment, and the position accuracy described in the third embodiment are used as the terminal status. Status acquisition unit 102 in the present embodiment acquires, as the terminal status, the receivable time period, the reception strength, and the position accuracy by means of the respective methods described in the above embodiments. Determination unit 103 determines that communication terminal 20 (referred to as a "first communication terminal") with the reception strength acquired by status acquisition unit 102 being larger than or equal to the threshold value is staying in the predetermined area. In the present embodiment, an area enclosed by obstacles that weaken a signal transmitted by communication terminal 20, such as inside space 51a in FIG. 9, is defined as the predetermined area. In addition, determination unit 103 determines that communication terminal 20 (referred to as a "second communication terminal") with the receivable time period acquired by status acquisition unit 102 being larger than or equal to the threshold value and with the position accuracy acquired by status acquisition unit 102 being larger than or equal to the threshold value, among communication terminals 20 with the reception strength acquired being smaller than the threshold value, is staying in the predetermined area. Communication terminal 20 regarding which the determination about stay is thus performed will now be described with reference to FIG. 18.

FIG. 18 is a diagram showing an exemplary state in which the predetermined area is congested. In this example, restaurant 50a in FIG. 9 is shown. Visitors in visitor group V41 to restaurant 50a are present in inside space 51a, and unlike in the example in FIG. 9, visitors in visitor group V42 are standing in a line to enter inside space 51a outside entrance 52. In the case where a line such as the line of visitor group V42 is made at a shop such as restaurant 50a, the place of the line is often fixed so as not to disturb passengers therearound. This place will be referred to as a "line place" below. In FIG. 18, line place R1 is indicated. The predetermined area in the present embodiment is an area combining inside space 51a and line place R1. Passengers W41 and W42 are moving outside restaurant 50a, and other-shop visitors X41 to X44 visit shops adjacent to restaurant 50a. All of them are located in receivable range A1. In the example in FIG. 18, determination unit 103 determines that communication terminals 20 possessed by visitor group V41 for which wall 53a is not an obstacle are the first communication terminals.

As described above with reference to FIG. 8, the receivable time periods of communication terminals 20 possessed by passengers W41 and W42, among communication terminals 20 for which wall 53a is an obstacle in this example, are smaller than the threshold value, and the receivable time periods of communication terminals 20 possessed by visitor group V42 and other-shop visitors X41 to X44 are larger than or equal to the threshold value. Communication terminals 20 possessed by visitor group V42 among communication terminals 20 with the receivable time periods being larger than or equal to the threshold value are located outdoors similarly to communication terminals 20 possessed by the passengers in FIG. 14, and can receive radio waves that have not transmitted through obstacles from some of the GPS satellites. For this reason, the position accuracy of communication terminals 20 possessed by visitor group V42 is larger than or equal to the threshold value. On the other hand, an obstacle that weakens the intensity of radio waves from the GPS satellites (not shown) always exists between all these GPS satellites and communication terminals 20 possessed by other-shop visitors X41 to X44. For this reason, the position accuracy of communication terminals 20 possessed by other-shop visitors X41 to X44 is smaller than the threshold value. Accordingly, determination unit 103 determines that communication terminals 20 possessed by visitor group V42 are the second communication terminals.

In a situation shown in FIG. 18, it is determined in the first to fourth embodiments that communication terminals 20 possessed by the other-shop visitors are staying in the predetermined area. Furthermore, it is determined in the second and third embodiments that visitor group V42 is not staying in the predetermined area. According to the present embodiment, even in this situation, it is determined, as described above, that only communication terminals 20 possessed by visitor group V41 located in inside space 51a of restaurant 50a and communication terminals 20 possessed by visitor group V42 located in line place R1 are staying in the predetermined area.

Eighth Embodiment

In the eighth embodiment, the reception strength described in the second embodiment, the position accuracy described in the third embodiment, and the terminal position (the position of communication terminal 20 measured by positioning unit 26) are used as the terminal status. Status acquisition unit 102 in the present embodiment acquires the reception strength and the position accuracy by means of the respective methods described in the second and third embodiments. At this time, in step S33 of the accumulation processing in FIG. 12, status acquisition unit 102 stores the measured terminal position of communication terminal 20 in addition to the positioning error and the MAC address, in association with one another. Then, in step S16 in FIG. 6, status acquisition unit 102 acquires, as the terminal status, the latest of the terminal positions corresponding to the terminal identification information (the MAC addresses of the receivable terminals) acquired in step S15.

Determination unit 103 in the present embodiment is a function realized by control unit 11, storage unit 12, and communication unit 13 in cooperation with one another. In the case where visitors to the predetermined area possibly stand in a line outdoors, storage unit 12 stores area data indicating the place where these visitors stand in a line (in the example in FIG. 18, line place R1). This area data is data indicating a plurality of positions on a boundary of an area, and for example, if the place where the visitors stand in a line is a square such as one denoted by R1, the area data is data indicating the latitudes and longitudes of four corners of the square.

Determination unit 103 determines that communication terminal 20 (referred to as a "third communication terminal" in the present embodiment) with the reception strength acquired by status acquisition unit 102 being larger than or equal to the threshold value is staying in the predetermined area, as in the seventh embodiment. Furthermore, determination unit 103 determines that, among communication terminals 20 with the reception strengths acquired being smaller than the threshold value, communication terminal 20 (referred to as a "fourth communication terminal") with the position accuracy acquired by status acquisition unit 102 being larger than or equal to the threshold value and with the terminal position acquired by status acquisition unit 102 being in an assumed stay area is staying in the predetermined area.

In the example in FIG. 18, determination unit 103 assumes communication terminals 20 possessed by visitor group V41 to be the third communication terminals and determines that these communication terminals 20 are staying in the predetermined area. In this example, communication terminals 20 with the reception strengths being smaller than the threshold value, i.e., communication terminals 20 possessed by visitor group V42 and passengers, among communication terminals 20 possessed by visitor group V42, the passengers, and other-shop visitors, are located outdoors, and accordingly the acquired position accuracy is larger than or equal to the threshold value. Furthermore, the terminal positions of communication terminals 20 possessed by visitor group V42 among communication terminals 20 possessed by visitor group V42 and the passengers are in assumed stay area R1. Accordingly, determination unit 103 assumes communication terminals 20 possessed by visitor group V42 to be the fourth communication terminals and determines that these communication terminals 20 are staying in the predetermined area.

According to the present embodiment, even in a situation shown in FIG. 18, it is determined that only communication terminals 20 possessed by visitors in visitor groups V41 and V42 to restaurant 50a are staying in the predetermined area, as described above.

Modifications

The above embodiments are mere examples of implementation of the present invention, and may be modified as described below. The above embodiments and the following modifications may also be combined for implementation, as necessary.

Modification 1

Although the space within a building such as restaurant 50 shown in FIG. 7 is included in the receivable range in the above embodiments, this need not be the case, and only an outdoor space, such as an open-air venue, may be included in the receivable range.

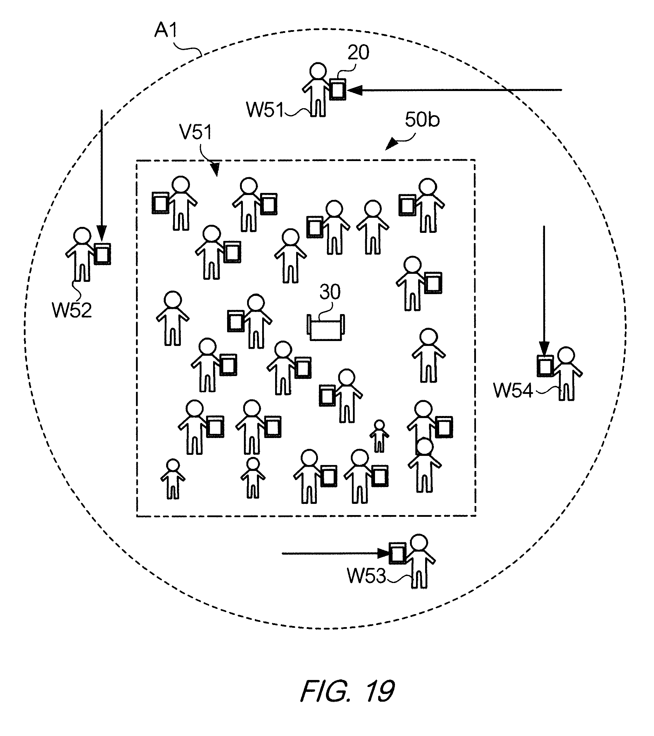

FIG. 19 is a diagram showing an exemplary state in which the predetermined area in the present modification is congested. In this example, an open-air venue 50b is shown. Visitors in visitor group V51 to venue 50b are present therein, and passengers W51 to W54 who are moving around the venue are present outside venue 50b. AP 30 is installed at the center of venue 50b, and all these people are located in receivable range A1. In this case, receivable range A1 is defined as the predetermined area.

For example, in the first embodiment, in a situation where there is a sidewalk or a road outside venue 50b and passengers only pass through receivable range A1, determination unit 103 can perform the determination about stay in the predetermined area, using the receivable time period. In the fourth embodiment, in a situation where a concert is being held in venue 50b and visitor group V51 hardly moves, while passengers only pass through receivable range A1 outside venue 50b as mentioned above, determination unit 103 can perform the determination about stay in the predetermined area, using the moving speed of communication terminal 20. In the fifth and sixth embodiments as well, since the terminal status is based on the user operation on communication terminal 20, determination unit 103 can perform the aforementioned determination regardless of whether the predetermined area includes a space within a building.

Modification 2

Information acquisition unit 101 may acquire the terminal identification information using a method different from the methods used in the above embodiments. For example, AP 30 may be configured to regularly transmit the history data to information processing apparatus 10, and information acquisition unit 101 may acquire the terminal identification information using the received history data, rather than transmitting the history request data to AP 30 in step S13 in FIG. 6. In short, information acquisition unit 101 need only be able to acquire the terminal identification information of communication terminal 20 (i.e., the receivable terminal) that can receive the signal from the communication unit, using any kind of method.

Modification 3

Status acquisition unit 102 may acquire the terminal status using a method different from the methods used in the above embodiments. For example, in the third to sixth embodiments, status acquisition unit 102 extracts the IP address of the receivable terminal identified by the terminal identification information (the MAC address of the receivable terminal) acquired in step S15 from the IP addresses indicated by the history data received in step S14 in FIG. 6, and transmits, to the extracted IP address, request data for giving a request for information (the terminal position, the positioning error, the communication history, and history of the program identification information) necessary for acquiring the terminal status. This request data may be transmitted via AP 30, or may be transmitted via base station 40. As a result of each receivable terminal transmitting the data indicating the aforementioned necessary information in response to the request data, status acquisition unit 102 acquires the terminal status using the information indicated by the data. Thus, status acquisition unit 102 need only be able to acquire the terminal status, using any kind of method.

Modification 4

Output unit 104 may calculate the number of people causing congestion in the predetermined area (Q in Equation (1) described in the first embodiment), using a method different from the methods used in the above embodiments. For example, output unit 104 may use, in Equation (1), a coefficient that varies depending on conditions such as the area in which the predetermined area is included, a time slot, and the season, instead of using the predetermined coefficient k. For example, output unit 104 increases the value of the coefficient k as the area in which the predetermined area is included is closer to an urban area where communication terminals 20 are more spread, and decreases the value of the coefficient k during summer vacation, holidays, and daytime when there are more child visitors who do not possess communication terminal 20. According to the present modification, in the case where the proportion of people possessing communication terminals 20 to those who are located around the predetermined area varies as described above depending on these conditions, the congestion degree information in which such a variation is reflected can be provided to the user.

In the above embodiments, output unit 104 outputs the data indicating calculated number Q of people as the congestion degree information, but this need not be the case. Number Q of people may be associated with a character string indicating the congestion degree (e.g.,

"congestion level 1", "congestion level 2", ... "high congestion degree", "middle congestion degree", ..., "congested", "not congested", etc.), and output unit 104 may output, as the congestion degree information, a character string corresponding to a calculated result. Also, output unit 104 may output, as the congestion degree information, data separately indicating the number of those who are forming a line and the number of other people among people causing congestion in the predetermined area. Output unit 104 in this case is a function realized by control unit 11, storage unit 12, and communication unit 13 in cooperation with one another. In the case where, for example, the predetermined area is inside space 51a and line place R1 shown in FIG. 18, storage unit 12 stores the number of those who can be seated in restaurant 50a. Control unit 11 calculates number Q of people using the method described in the seventh or eighth embodiment, for example, and calculates the number of people forming a line by subtracting the number of people stored in storage unit 12 from calculated number Q of people. Thus, the information processing apparatus can provide the number of people forming a line in the predetermined area as the congestion degree information.

Modification 5

In the above embodiments, the congestion degree information provision processing is started upon the user performing the operation (request operation) for giving a request for the congestion degree information of the predetermined area. However, if there are a plurality of predetermined areas, the user may be caused to perform an operation of selecting one of the predetermined areas. This operation is an operation of selecting any piece of identification information from a list in which identification information for identifying a communication unit whose receivable range includes the predetermined area is registered, for example. The identification information for identifying the communication unit is the name of a shop where the communication unit is installed, the address of this shop, the number unique to the communication unit, or the like, for example. Thus, the user can obtain the congestion degree information of the predetermined area corresponding to the registered identification information.

Modification 6

Although the case where only one AP 30 serving as the communication unit is installed in a place where people visit, such as restaurant 50, is described in the above embodiments, a plurality of APs 30 may be installed.

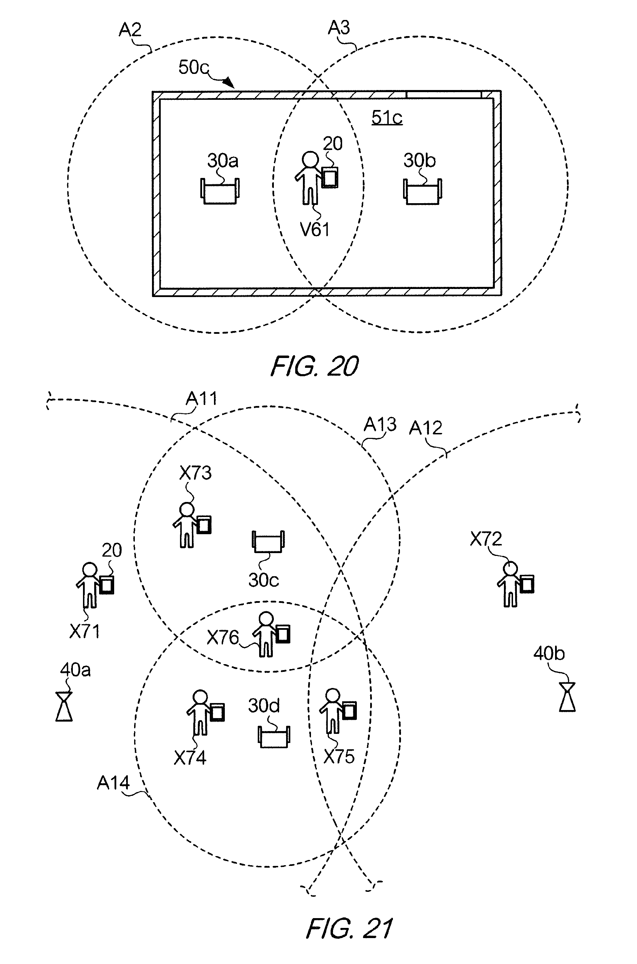

FIG. 20 is a diagram showing an exemplary state in which the predetermined area in the present modification is congested. In this example, two APs 30a and 30b are installed in inside space 51c of shop 50c. In FIG. 20, receivable range A2 of AP 30a and receivable range A3 of AP 30b are shown. All locations in inside space 51c are included in at least one of the receivable ranges due to these two access points. Visitor V61 is in inside space 51c. Communication terminal 20 (hereinafter referred to as "communication terminal 20a") possessed by visitor V61 is located in the receivable ranges of both A2 and A3. In this case, communication terminal 20a connects to only one of AP 30a and AP 30b. For this reason, communication terminal 20a is assigned the IP address from only one of AP 30a and AP 30b. As described above in the first embodiment, since AP 30 stores the history of communication with communication terminal 20 to which AP 30 has assigned an IP address, there cannot be a case where two pieces of the terminal identification information or the terminal status of two communication terminals is acquired from communication terminal 20a at the time of the acquisition of the terminal identification information of the receivable terminal or the acquisition of the terminal status (the receivable time period and the reception strength) using the communication history.

If it is attempted to include inside space 51c in the receivable range of a single access point, the receivable range outside shop 50c will be wider than that in the example in FIG. 20, and the number of communication terminals 20 possessed by passengers located in the receivable range will be likely to be large. For example, in the case where the determination about stay in the predetermined area is performed using the moving speed of communication terminal 20 as in the fourth embodiment, if a passenger stops for a while to make a call or send a message, it may possibly be determined that communication terminal 20 possessed by this passenger is staying in the predetermined area. The more the receivable terminals located outside shop 50c are, the higher the possibility of such a determination result is, and therefore a smaller number of receivable terminals is preferable. As a result of increasing the number of access points as in the present modification, the number of receivable terminals located outside shop 50c can be reduced.

Modification 7

Although the communication unit in the information processing system 1 is AP 30 in the above embodiments, the communication unit may alternatively be base station 40. In this case, information processing apparatus 10 provides the congestion degree information by performing an operation described below, for example. Base station 40 repeatedly transmits a signal at time intervals of a predetermined time period (e.g., 1 second) and receives a signal (referred to as a "mobile station signal") from communication terminal 20 serving as a mobile station receiving the transmitted signal, in order to perform mobile communication with communication terminal 20. This mobile station signal indicates an ID (referred to as a "unit ID") unique to communication terminal 20. In the present modification, base station 40 stores, as the communication history, the unit ID indicated by the mobile station signal and the date and time (referred to as "communication date and time") when the mobile station signal is received, in association with each other.

Information processing apparatus 10 transmits the history request data to base station 40, instead of transmitting the history request data to AP 30, in step S13 in FIG. 6. Base station 40, upon receiving the history request data, transmits the history data indicating the stored communication history to information processing apparatus 10 in response to the request (step S14). The unit ID indicated by this history data is information for identifying communication terminal 20 that can receive a signal from the communication unit (in this case, base station 40), i.e., the terminal identification information for identifying the receivable terminal. Information processing apparatus 10 acquires, as the terminal identification information, the unit ID indicated by the received history data (step S15). This acquisition is an operation performed by information acquisition unit 101. Next, information processing apparatus 10 acquires, as the receivable time period, the time period for which the communication date and time indicated by the history data continues (step S16). Thereafter, the congestion degree information is provided to communication terminal 20 by information processing apparatus 10 performing the operations in step S17 and subsequent steps.

Note that the communication history stored in base station 40 may include the reception strength described in the second embodiment and the access destination identification information described in the fifth embodiment, in addition to the unit ID and the communication date and time. In this case, information processing apparatus 10 determines whether communication terminal 20 is staying in the predetermined area, using the methods described in the embodiments.

Modification 8

In the case of using the communication history stored in base station 40 as described above, the information processing system may provide the congestion degree information using history (referred to as "reception history") of communication terminal 20 receiving signals from a plurality of communication units. AP 30 repeatedly transmits a signal (referred to as an "AP signal") indicating information necessary for connection based on the wireless LAN standard at time intervals of a predetermined time period (e.g., 0.1 second), and this AP signal includes information (referred to as "AP identification information") for identifying AP 30. Communication terminal 20 receives the AP signal even when not being connected to AP 30, and at this time, communication terminal 20 also acquires the AP identification information indicated by the received AP signal. Base station 40 also transmits a signal (referred to as a "base station signal") for performing mobile communication as described above, and this base station signal includes information (referred to as "base station identification information") for identifying base station 40. Communication terminal 20 also acquires the base station identification information from the received base station signal.

In a place where the receivable ranges of AP 30 and base station 40 overlap each other, communication terminal 20 thus acquires the AP identification information and the base station identification information (which are referred to as "communication unit identification information" when not being distinguished from each other). In the present modification, communication terminal 20 includes the acquired communication unit identification information, in addition to the unit ID, in the aforementioned mobile station signal and then transmits this mobile station signal. Base station 40 stores the unit ID and the communication unit identification information indicated by the transmitted mobile station signal, and includes the communication unit identification information in the history data and transmits this history data in response to a request from information processing apparatus 10. An example of information processing apparatus 10 thus acquiring the communication unit identification information will now be described with reference to FIG. 21.

FIG. 21 is a diagram showing an exemplary area in which the receivable ranges overlap one another in the present modification. In this example, receivable ranges A11, A12, A13, and A14 of two base stations 40a and 40b and two APs 30c and 30d, respectively, overlap with one another as shown in the diagram. In FIG. 21, possessors X71 to X76 possessing communication terminals 20 are shown. Possessors X71 and X72 are located in receivable ranges A11 and A12, respectively. Possessor X73 is located in an area where receivable ranges A11 and A13 overlap, and possessor X74 is located in an area where receivable ranges A11 and A14 overlap. Possessor X75 is located in an area where receivable ranges A11, A12, and A14 overlap, and possessor X76 is located in an area where receivable ranges A11, A13, and A14 overlap.

Although only one possessor is shown in each area for the sake of clarity of the diagram in the example in FIG. 21, a plurality of possessors may be located in each area, and a possessor may also be located in an area where receivable ranges in a different combination overlap. In the present modification, information processing apparatus 10 acquires the communication unit identification information acquired by communication terminals 20 possessed by these possessors, from the history data stored in respective base stations 40.

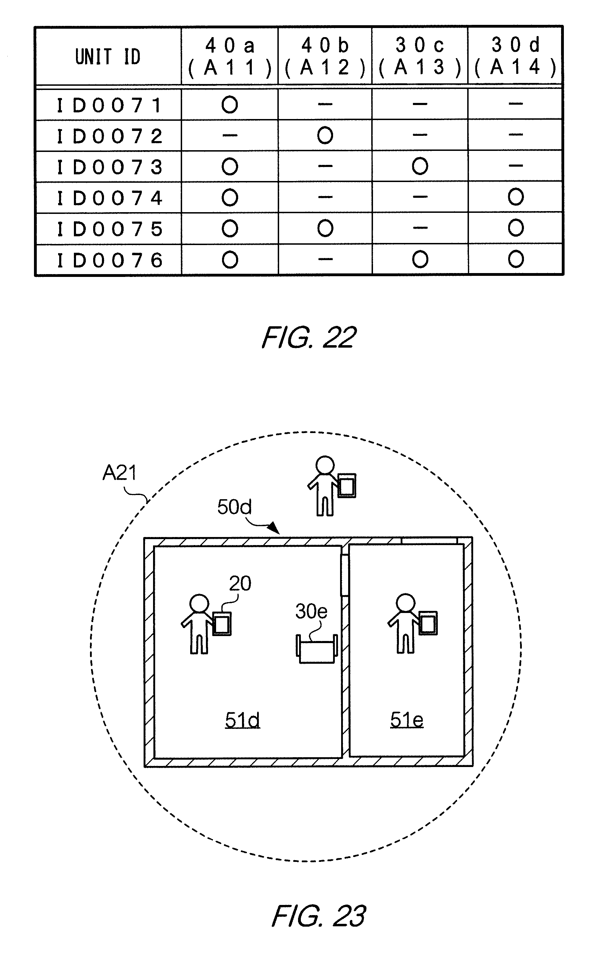

FIG. 22 is a table for illustrating exemplary communication unit identification information acquired by information processing apparatus 10. This table shows the unit IDs (ID0071 to ID0076) of communication terminals 20 possessed by possessors X71 to X76, codes (40a, 40b, 30c and 30d) of the communication units identified by the communication unit identification information acquired in association with the unit IDs, and the receivable ranges (A11, A12, A13, and A14).

For example, in the case where an area where receivable ranges A11 and A13 overlap is the predetermined area, information processing apparatus 10 acquires the unit IDs (ID0073 and ID0076) of two communication terminals 20 as the identification information of the receivable terminals. In the case where an area where receivable ranges A11 and A14 overlap is the predetermined area, information processing apparatus 10 acquires the unit IDs (ID0074, ID0075, and ID0076) of three communication terminals 20 as the identification information of the receivable terminals. In the case where an area where receivable range A12 does not overlap with other receivable ranges is the predetermined area, information processing apparatus 10 acquires the unit ID (ID0072) of one communication terminal 20 as the identification information of the receivable terminal. This acquisition operation is performed by information acquisition unit 101 shown in FIG. 5.

After acquiring the identification information of the receivable terminals located in the predetermined area as described above, information processing apparatus 10 performs the operations in step S16 and subsequent steps in FIG. 6, thereby providing the congestion degree information of the respective predetermined areas to the communication terminals 20.

All of the aforementioned predetermined areas are areas each defined based on whether the receivable ranges of a plurality of communication units overlap. According to the present modification, the congestion degree information of the predetermined areas that are thus defined can be provided.

Note that information processing apparatus 10 may determine the predetermined area where communication terminal 20 is located, using the reception strength in addition to the communication unit identification information. For example, communication terminal 20 (referred to as a "communication terminal 20b" below) possessed by possessor X76 shown in FIG. 21 is located in both an area where receivable ranges A11 and A13 overlap and an area where receivable ranges A11 and A14 overlap. If the reception strength of the AP signal from AP 30d is stronger than the reception strength of the AP signal from AP 30c with respect to communication terminal 20b, information processing apparatus 10 acquires the identification information of communication terminal 20b as the identification information of the receivable terminal located in the latter area (the area where receivable ranges A11 and A14 overlap). Thus, areas obtained by further dividing an area where the receivable ranges of a plurality of communication units overlap can be defined as the predetermined areas to provide the congestion degree information.

Modification 9

Information processing apparatus 10 may perform the determination about stay in the predetermined area based on the reception strength described in the second embodiment, using the reception strength (referred to as a "second reception strength") included in the communication history stored in aforementioned base station 40, in addition to the reception strength (referred to as a "first reception strength") included in the communication history of AP 30. Thus, the congestion degree information can be provided in the following case.

FIG. 23 is a diagram showing an exemplary state in which the predetermined area is congested. In this example, shop 50d having two rooms (inside spaces 51d and 51e) partitioned by a wall is shown. AP 30e is installed in inside space 51d, and receivable range A21 of AP 30e includes entire shop 50d.

Here, for example, the case where a signal is weakened by an obstacle such as a wall or a ceiling will be referred to as "the reception strength being weak", and the case where a signal is transmitted without via an obstacle will be referred to as "the reception strength being strong". In the example shown in FIG. 23, the first reception strength of communication terminal 20 located in inside space 51d is strong, and the second reception strength thereof is weak. Both the first and second reception strengths of communication terminal 20 located in inside space 51e are weak. Meanwhile, the first reception strength of communication terminal 20 located outdoors is weak, and the second reception strength thereof is strong. Information processing apparatus 10 determines whether the receivable terminal is staying in the predetermined area, based on such a difference between the first and second reception strengths. This determination is an operation performed by determination unit 103 shown in FIG. 5. Specifically, determination unit 103 uses threshold values defined respectively for the first and second reception strengths to determine whether the respective reception strengths are strong or weak (a reception strength larger than or equal to the threshold value is strong, and a reception strength smaller than the threshold value is weak). Thus, according to the present modification, the congestion degree information of two predetermined areas (in this example, inside spaces 51d and 51e) can be provided using one access point.

In a situation shown in FIG. 9, if a passenger approaches wall 53a of restaurant 50a, the first reception strength of communication terminal 20 possessed by the passenger possibly becomes larger than or equal to the threshold value, especially in the case where there is a window or a door nearby. In this case, determination unit 103 determines that communication terminal 20 with the first reception strength being larger than or equal to the threshold value (strong) and with the second reception strength being larger than or equal to the threshold value (strong) is the receivable terminal that is not staying in the predetermined area. On the other hand, determination unit 103 determines that communication terminal 20 with the first reception strength being larger than or equal to the threshold value (strong) and with the second reception strength being smaller than the threshold value (weak) is located in inside space 51a. Thus, according to the present modification, the determination about stay in the predetermined area is performed using both the first and second reception strengths, and therefore the accuracy of the degree of congestion in the area can be improved, as compared with the case of performing the determination about stay in the predetermined area using only the first reception strength.

Modification 10

In the above embodiments, information processing apparatus 10 receives the congestion degree information request data in step S12 in FIG. 6 and thereby provides the congestion degree information indicated by the congestion degree information data generated after receiving the congestion degree information request data, i.e., the congestion degree information indicating a real-time congestion degree. However, this need not be the case, and a change of the past congestion degree may be provided as the congestion degree information. In this case, for example, information processing apparatus 10 generates the congestion degree information data at predetermined time intervals (e.g., every 10 minutes), and accumulates the congestion degree information data in association with the date and time of the generation. When the congestion degree information request data is transmitted from communication terminal 20, information processing apparatus 10 transmits, to communication terminal 20, history data indicating history of a change of the congestion degree indicated by the accumulated congestion degree information data and the date and time associated therewith. The congestion degree information indicating the change of the past congestion degree is provided to the user by communication terminal 20 displaying a graph of the congestion degree of each date and time in the past indicated by the history data.

Note that information processing apparatus 10 may provide a predicted future congestion degree based on the aforementioned history data as the congestion degree information. In this case, when the congestion degree information request data is transmitted from communication terminal 20, information processing apparatus 10 generates the aforementioned history data and calculates, for example, an average of the congestion degree in each time slot on each day in the past one month. Information processing apparatus 10 provides the calculated average as the congestion degree information indicating the predicted congestion degree in each time slot on each day.

Modification 11

The present invention is also understood as an information processing method for realizing processing carried out by the information processing apparatus, as well as the information processing apparatus and the information processing system. The processing mentioned here is, for example, the congestion degree information provision processing and the accumulation processing shown in FIGS. 6, 12, and 17. Furthermore, the present invention is also understood as a program for causing a computer, such as information processing apparatus 10, to function as each unit shown in FIG. 5. This program may be provided in the form of a recording medium such as an optical disc storing the program, or may be provided in the form in which a computer is caused to download the program via a network such as the Internet and installs the program so as to be able to use it.

Reference Signs List

| 1 | Information processing system |
| 2 | Network |
| 10 | Information processing apparatus |
| 20 | Communication terminal |
| 30 | AP (access point) |
| 40 | Base station |
| 11, 21, 31 | Control unit |
| 12, 22, 32 | Storage unit |
| 13 | Communication unit |
| 27, 33 | First communication unit |
| 28, 34 | Second communication unit |
| 26 | Positioning unit |
| 101 | Information acquisition unit |
| 102 | Status acquisition unit |
| 103 | Determination unit |
| 104 | Output unit |

**Claims**

1. An information processing apparatus comprising:

an acquisition unit configured to acquire a status of a communication terminal capable of receiving a signal from a communication unit;
a determination unit configured to determine whether the communication terminal is staying in a predetermined area, based on the status acquired by the acquisition unit; and
an output unit configured to output information indicating a degree of congestion in the area in accordance with the number of communication terminals that are staying in the area according to the determination by the determination unit.

2. The information processing apparatus according to claim 1,
wherein the acquisition unit acquires, as the status, a time period during which the communication terminal can receive the signal, and
the determination unit determines that the communication terminal with the time period acquired by the acquisition unit being larger than or equal to a threshold value is staying in the area.

3. The information processing apparatus according to claim 1 or 2,
wherein the acquisition unit acquires, as the status, a reception strength at the time when the communication unit receives a signal from the communication terminal, and
the determination unit determines that the communication terminal with the reception strength acquired by the acquisition unit being larger than or equal to a threshold value is staying in the area.

4. The information processing apparatus according to any one of claims 1 to 3,
wherein the communication terminal includes a positioning unit configured to measure a position of the communication terminal,
the acquisition unit acquires, as the status, an accuracy of the position measured by the positioning unit, and
the determination unit determines that the communication terminal with the accuracy acquired by the acquisition unit being smaller than a predetermined level is staying in the area.

5. The information processing apparatus according to any one of claims 1 to 4,
wherein the communication terminal includes a positioning unit configured to measure a position of the communication terminal,
the acquisition unit acquires, as the status, a speed at which the position measured by the positioning unit changes, and
the determination unit determines that the communication terminal with the speed acquired by the acquisition unit being smaller than a threshold value is staying in the area.

6. The information processing apparatus according to any one of claims 1 to 5,
wherein the acquisition unit acquires, as the status, access destination identification information for identifying an access destination that has been accessed by the communication terminal, and
if the access destination identified by the access destination identification information acquired by the acquisition unit is a predetermined access destination, the determination unit determines that the communication terminal that has accessed the access destination is staying in the area.

7. The information processing apparatus according to any one of claims 1 to 6,
wherein the acquisition unit acquires, as the status, program identification information for identifying a program that has been executed by the communication terminal, and
if the program identified by the program identification information acquired by the acquisition unit is a predetermined program, the determination unit determines that the communication terminal that has executed the program is staying in the area.

8. The information processing apparatus according to any one of claims 1 to 7,
wherein the communication terminal includes a positioning unit configured to measure a position of the communication terminal,
the acquisition unit acquires, as the status, a reception strength at the time when the communication unit receives a signal from the communication terminal, a time period during which the communication terminal can receive the signal, and an accuracy of the position measured by the positioning unit, and
the determination unit determines that a first communication terminal with the reception strength acquired by the acquisition unit being larger than or equal to a threshold value and, among communication terminals with the reception strength acquired being smaller than the threshold value, a second communication terminal with the time period acquired by the acquisition unit being larger than or equal to a threshold value and with the accuracy acquired by the acquisition unit being larger than or equal to a threshold value, are staying in the area.

9. The information processing apparatus according to any one of claims 1 to 8,
wherein the communication terminal includes a positioning unit configured to measure a position of the communication terminal,
the acquisition unit acquires, as the status, a reception strength at the time when the communication unit receives a signal from the communication terminal, the position measured by the positioning unit, and an accuracy of the measured position, and
the determination unit determines that a third communication terminal with the reception strength acquired by the acquisition unit being larger than or equal to a threshold value and, among communication terminals with the reception strength acquired being smaller than the threshold value, a fourth communication terminal with the accuracy acquired by the acquisition unit being larger than or equal to a threshold value and with the position acquired by the acquisition unit being in a prescribed area are staying in the area.

10. An information processing method comprising:

an acquisition step of acquiring a status of a communication terminal capable of receiving a signal from a communication unit, by an information processing apparatus;
a determination step of determining whether the communication terminal is staying in a predetermined area, based on the status acquired in the acquisition step, by the information processing apparatus; and
an output step of outputting information indicating a degree of congestion in the area in accordance with the number of communication terminals that are staying in the area according to the determination in the determination step, by the information processing apparatus.

*FIG. 1*

*FIG. 2*

*FIG. 3*

10 ──

| STORAGE UNIT | 12 | CONTROL UNIT | 11 | COMMUNICATION UNIT |

13

*FIG. 4*

10 ──

| INFORMATION ACQUISITION UNIT | 101 | → | STATUS ACQUISITION UNIT | 102 | → | DETERMINATION UNIT | 103 | → | OUTPUT UNIT | 104 |

*FIG. 5*

COMMUNICATION TERMINAL | 20 | INFORMATION PROCESSING APPARATUS | 10 / 30 | AP

ACCEPT REQUEST OPERATION — S11

S12 →

S13 →

← S14

S15 — ACQUIRES TERMINAL IDENTIFICATION INFORMATION

S16 — ACQUIRES TERMINAL STATUS

S17 — DETERMINES WHETHER EACH RECEIVABLE TERMINAL IS STAYING IN PREDETERMINED AREA

S18 — GENERATES CONGESTION DEGREE INFORMATION DATA

S19 ←

S20 — DISPLAYS CONGESTION DEGREE INFORMATION

*FIG. 6*

22

*FIG. 7*

*FIG. 8*

FIG. 9

FIG. 10

PASSENGERS W11, W12
OTHER-SHOP VISITORS X11-X18

VISITOR
GROUP V11

0    B3                    B4           B1        B2      RECEPTION
                                                          STRENGTH

*FIG. 11*

COMMUNICATION TERMINAL  20  •••   BASE STATION  40   INFORMATION PROCESSING APPARATUS

10

MEASURE POSITION  S31

S32                    S32

S33   STORE POSITIONING ERROR AND MAC ADDRESS

*FIG. 12*

*FIG. 13*

*FIG. 14*

FIG. 15

FIG. 16

FIG. 17

FIG. 18

*FIG. 19*

*FIG. 20*

*FIG. 21*

| UNIT ID | 4 0 a<br>( A 1 1 ) | 4 0 b<br>( A 1 2 ) | 3 0 c<br>( A 1 3 ) | 3 0 d<br>( A 1 4 ) |
|---|---|---|---|---|
| I D 0 0 7 1 | ○ | — | — | — |
| I D 0 0 7 2 | — | ○ | — | — |
| I D 0 0 7 3 | ○ | — | ○ | — |
| I D 0 0 7 4 | ○ | — | — | ○ |
| I D 0 0 7 5 | ○ | ○ | — | ○ |
| I D 0 0 7 6 | ○ | — | ○ | ○ |

*FIG. 22*

*FIG. 23*

## INTERNATIONAL SEARCH REPORT

| International application No. |
|---|
| PCT/JP2013/072976 |

A. CLASSIFICATION OF SUBJECT MATTER

*G06Q50/10*(2012.01)i, *G08G1/01*(2006.01)i, *H04W4/02*(2009.01)i, *H04W64/00* (2009.01)i

According to International Patent Classification (IPC) or to both national classification and IPC

B. FIELDS SEARCHED

Minimum documentation searched (classification system followed by classification symbols)
G06Q50/10, G08G1/01, H04W4/02, H04W64/00

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2001-325300 A (Sharp Corp.),<br>22 November 2001 (22.11.2001),<br>paragraphs [0039], [0040], [0063], [0064]<br>(Family: none) | 1,5,10<br>2-4,8,9<br>6,7 |
| Y<br>A | JP 2003-288663 A (Seiko Epson Corp.),<br>10 October 2003 (10.10.2003),<br>paragraphs [0012], [0015], [0023], [0045],<br>[0051], [0070], [0101]<br>(Family: none) | 2<br>1,5,10 |
| Y | JP 2011-207303 A (Saxa, Inc.),<br>20 October 2011 (20.10.2011),<br>paragraphs [0016], [0021]<br>(Family: none) | 3,4,8,9 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 November, 2013 (14.11.13) | 26 November, 2013 (26.11.13) |

| Name and mailing address of the ISA/<br>Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001325300 A